# EUROPÄISCHE PATENTSCHRIFT

(11) **EP 4 126 486 B1**
(45) Veröffentlichungstag und Bekanntmachung des Hinweises auf die Patenterteilung: **14.02.2024**
(21) Anmeldenummer: 21717347.5
(22) Anmeldetag: 31.03.2021
(51) Int. Cl.: B29B 9/16, B29B 7/74, B29B 7/82, B29B 7/84, B29B 7/86, C08F 6/00, B29B 13/06, B29B 9/06, B29B 7/66, B29B 7/38

(54) **VERFAHREN ZUR GERUCHSENTFERNUNG AUS RECYCELTEN POLYOLEFIN-PELLETS**
PROCESS FOR DEODORIZATION OF RECYCLED POLYOLEFIN PELLETS
PROCÉDÉ DE DÉSODORISATION DE GRANULÉS DE POLYOLÉFINE RECYCLÉS

(30) Priorität: 03.04.2020 CH 4022020
(43) Veröffentlichungstag der Anmeldung: 08.02.2023
(73) Patentinhaber: ALPLA Werke Alwin Lehner GmbH & Co. KG, 6971 Hard (AT)
(72) Erfinder: SIEGL, Robert, 6850 Dornbirn (AT); HEYDE, Michael, 51427 Bergisch Gladbach (DE)
(74) Vertreter: Swisspat Riederer Hasler Patentanwälte AG
(86) Internationale Anmeldenummer: PCT/EP2021/058412
(87) Internationale Veröffentlichungsnummer: WO 2021/198323

(56) Entgegenhaltungen:
- EP-A1- 1 671 773
- EP-B1- 2 507 022
- EP-B1- 2 635 609
- US-A- 5 521 264
- US-A- 5 741 350
- US-A1- 2010 004 408
- US-A1- 2013 125 581
- US-A1- 2014 202 847
- SCHNEIDER H., WILMS H.: "Entgasen von Polymeren in Silos bei der Kunststoff-Herstellung" In: "Lehrbuch Aufbereitungstechnik 2006", 1. Januar 2006 (2006-01-01), VDI Wissensforum IWB GmbH, VDI-Gesellschaft Kunststofftechnik, XP055442349, Seite 21 - Seite 29

## Beschreibung

### Gebiet der Erfindung

Die Erfindung betrifft ein Verfahren zur Geruchsentfernung aus recycelten Polyolefin-Pellets.

### Stand der Technik

Polyolefin-Behälter sind bei ihrer Nutzung unterschiedlichen chemischen Substanzen ausgesetzt, die in das Material migrieren und entweder direkt einen deutlichen Geruch (Aroma-Stoffe aus dem Füllgut) verursachen, oder indirekt nach einer Reaktion mit anderen Substanzen bzw. durch thermische oder oxidative Reaktionsprozesse. Zusätzlich werden den Polyolefinen zum Teil Additive zugesetzt, die ebenfalls zu unangenehmen Gerüchen führen können (z.B. Abbau von Canauba-Wachs als Entformungshilfe.) Als Leitsubstanz für die Aufreinigung von Polyoleinen wird oft Limonen verwendet, da die Messung der Limonenkonzentration seit vielen Jahren im Polyester-Recycling Stand der Technik ist und leicht zu realisieren ist.

In der EP 2 507 022 A1 ist ein Reinigungsverfahren zur Geruchsentfernung aus Kunststoff-Pellets bekannt, wobei die Kunststoff-Pellets aus gebrauchtem Polyolefinmaterial extrudiert wurden. Der Limonengehalt wird bei diesem Verfahren auf weniger als 320 ppb reduziert. Dabei werden die geruchsbelasteten Pellets mit heißer Luft stundenlang durchströmt und dabei gerührt. «Frische», unbehandelte Pellets werden in regelmäßigen Abständen zugeführt, im gleichen Umfang werden behandelte Pellets ausgetragen. Die zugeführte Luft wird einerseits zum Erhitzen der Pellets verwendet und andererseits zum Abtransport der flüchtigen geruchsrelevanten Verunreinigungen. Durch diese Struktur ist ein Teil der Pellets kalt und kann erst sehr spät entsprechend der späten Erwärmung seine Verunreinigungen abgeben. Schlimmer noch, die gerade entfernten Verunreinigungen kondensieren auf noch kalten Pellets und kontaminieren diese zusätzlich. Für die Erwärmung der diskontinuierlich zugegebenen Pellets sind sehr viel größerer Luftmengen erforderlich als für den Stoffübergang gebraucht würden. Technisch macht die Kombination des Erhitzens und der gleichzeitigen Dekontamination daher wenig Sinn.

Nachteilig an diesem Verfahren ist zusätzlich der hohe Energieaufwand, da die heiße Luft ungenützt entweicht, und heiße Pellets den Prozess verlassen. Auch ist der Energieaufwand für das Rühren der Pellets beträchtlich. Noch ein Nachteil ist der Austrag der Luft mit den entfernten Kontaminationen in die unmittelbare Umgebung und die damit verbundene Belastung der Umgebung.

Ein weiterer Nachteil an diesem Verfahren ist die seitliche Einbringung von Luft unter Druck, die ein Ablassen der Pellets nur in Chargen zulässt und daher eine Unterbrechung des Prozesses bewirkt.

In der US 2014/202847 A1 ist ein Verfahren zur Geruchsentfernung aus recycelten Polyolefin-Flakes offenbart, bei welchem gebrauchte wiederverwertbare Polyolefin-Flakes in einem Extruder extrudiert werden und die noch geruchsbelasteten Polyolefin-Pellets in einer Unterwasser-Granulierung oder Wasser-Ring-Granulierung ausgebildet werden. Anschliessend ist ein Geruchsentfernungs-Prozess vorgesehen, bei welchem die feuchten Pellets in einem Dampf-Stripper mit einem zirkulierenden Inertgas in Kontakt gebracht werden und der Dampf in einer Kondensatfalle ausgefällt wird.

### Aufgabe der Erfindung

Aus den Nachteilen des beschriebenen Stands der Technik resultiert die Aufgabe ein energiesparendes und effizientes Verfahren zur Geruchsentfernung aus recycelten Polyolefin-Pellets vorzuschlagen.

### Beschreibung

Die Lösung der gestellten Aufgabe gelingt mit einem Verfahren nach dem unabhängigen Anspruch 1 zur Geruchsentfernung aus recycelten Polyolefin-Pellets. Weiterbildungen und/oder vorteilhafte Ausführungsvarianten sind Gegenstand der abhängigen Patentansprüche.

Die Erfindung betrifft somit ein Verfahren zur Geruchsentfernung aus recycelten Polyolefin-Pellets, wobei gebrauchte wiederverwertbare Polyolefin-Flakes in einem Extruder extrudiert werden und die noch geruchsbelasteten Polyolefin-Pellets in einer Unterwasser-Granulierung oder Wasser-Ring-Granulierung ausgebildet werden, und ein Geruchsentfernungs-Prozess vorgesehen ist, bei welchem in einem ersten Schritt die feuchten Pellets in einem Dampf-Stripper mit einem zirkulierenden Inertgas mit einer Temperatur zwischen 110°C und 160°C in Kontakt gebracht werden und der Dampf in einer Kondensatfalle ausgefällt wird, wodurch in dem ersten Schritt an der Oberfläche der Pellets anhaftende Geruchskomponenten entfernt werden und die Pellets vorgewärmt werden, dadurch gekennzeichnet, dass in einem zweiten Schritt die Pellets einem unter Unterdruck stehenden Vakuumsilo aufgegeben werden und mit einem im Gegenstrom strömenden Gas kontaktiert werden, wobei durch den Unterdruck in die Pellets eingedrungene Geruchskomponenten entfernt werden und die Temperatur der Pelletsoberfläche über mehr als 10 Stunden unterhalb von 123°C bleibt, und dass in einem dritten Schritt die Pellets nach dem Vakuumsilo einem ersten Wärmetauscher aufgegeben werden und mit dem im Gegenstrom strömenden Gas aus dem zweiten Schritt in Kontakt gebracht werden, wodurch die Pellets gekühlt werden und das Gas für den zweiten Schritt vorgewärmt wird.

Der erste Schritt bewirkt eine besonders energieschonende Erwärmung der Pellets bei einer gleichzeitigen nahezu vollständigen Entfernung der oberflächlich anhaftenden Geruchskomponenten, wie Terpene.

Der zweite Schritt hat folgende Vorteile: Der Wärmeübergang zwischen dem Gas und den Pellets ist durch den Unterdruck stark eingeschränkt. Die Migration der Geruchskomponenten und die Verdampfung sind jedoch stark beschleunigt, da der Dampfdruck der Geruchskomponenten durch den Unterdruck steigt und die Geruchskomponenten mit fallenden Druck in dem Vakuumsilo flüchtiger werden. Durch die erhöhte Gastemperatur können sich die Geruchskomponenten besser im Gas lösen und verdampfen deutlich besser. Durch die homogene Temperaturverteilung in der Pellet-Schüttung bzw. die geringen Temperatur-Unterschiede in dem Vakuumsilo, rekondensieren weniger geruchsaktive Substanzen auf den kälteren Pellets bzw. Granulatkörnern und diese können einfacher aus dem Prozess entfernt werden. Es können daher Geruchskomponenten ausgetrieben werden, die tief in den Pellets eingebettet sind und nur langsam an die Oberfläche migrieren. Olfaktorisch muffige Kontaminationen wie Carbonsäuren, Aldehyde, Lactone, insbesondere Nonanal, Nonenal, Buttersäure oder Valeriansäure können daher nahezu vollständig aus den Pellets entfernt werden. Da das Erhitzen und die Dekontamination durch den ersten und den zweiten Schritt des Verfahrens entkoppelt werden, können die Pellets viel länger unter einer erhöhten Temperatur verweilen, ohne untereinander zu verkleben. Diese ist bei bis jetzt bekannten Prozessen nicht möglich. Beim vorliegenden Verfahren können die Pellets mehr als 10 Stunden bei über 100°C verweilen.

Der dritte Schritt ermöglicht es, zwei Ziele gleichzeitig zu erfüllen: Durch den Wärmeaustausch zwischen den Pellets und dem Gas werden die Pellets durch das kalt eintretende Gas möglichst stark gekühlt und das Gas vorgewärmt, sodass die zusätzliche Erwärmung durch einen Gaserhitzer möglichst wenig Energie benötigt.

In einer bevorzugten Ausführungsform der Erfindung wird die Kondensatfalle als Teilstrom des Inertgas-Kreislaufes betrieben. Dadurch ist es nicht notwendig den gesamten Inertgasstrom abzukühlen, um die Geruchskomponenten in der Kondensatfalle auszukondensieren. Ein Teil des Gasstromes kann direkt in dem Dampf-Stripper rückgeleitet werden. Auch kann eine Überladung der Kondensatfalle verhindert werden, wenn ein Teil des Gasstromes an der Kondensatfalle vorbeigeleitet werden kann.

In einer weiteren bevorzugten Ausführungsform der Erfindung wird die Kondensatfalle als ein zweiter Wärmetauscher betrieben. Der zweite Wärmetauscher kann auch zusätzlich zu einer bereits vorhandenen Kondensatfalle vorgesehen sein. Der zweite Wärmetauscher kann einen Teil der Heizenergie des Inertgasstromes zurückgewinnen

Als zweckdienlich hat es sich erwiesen, wenn die Oberflächentemperatur der Pellets in dem Dampf-Stripper zwischen 100 °C und 120 °C beträgt. Dadurch werden die Pellets für den Vakuum-Silo vorgeheizt. Dementsprechend kann eine Rekondensation von Geruchskomponenten in dem Vakuum-Silo vermieden werden.

Zweckmässigerweise ist der Dampf-Stripper ein horizontal orientiertes Drehrohr mit einer Zwangsförderung der Pellets durch die Rotation des Drehrohres. Dadurch lässt sich der Kontakt zwischen dem Inertgasstrom und den Pellets möglich innig realisieren. Dies führt dazu, dass die Erwärmung der Pellets und der Stoffübergang der an der Oberfläche der Pellets anhaftenden Geruchskomponenten weiter verbessert wird. Besonders zweckmäßig hat sich der Austrag der Kontaminationen über die Kondensatfalle erwiesen, da die Kontaminationen im Kondensat, in flüssiger Form, sehr gut aufgereinigt werden können, ohne die Umgebung des Recycling Werkes intensiv mit gasförmigen Kontaminationen zu belasten.

In einer weiteren bevorzugten Ausführungsform der Erfindung beträgt die Verweilzeit der Pellets in dem Dampf-Stripper zwischen 30 min und 180 min und bevorzugt zwischen 50 min und 120 min. Die Erwärmung der Pellets erfolgt rasch auf eine gleichmässige Zieltemperatur. D.h. die Spreizung der Temperatur der Pellets während der Behandlung ist im Gegensatz zum Stand der Technik gering. Dadurch kann eine Rekondensation der Geruchskomponenten besonders effektiv verhindert werden.

Als vorteilhaft erweist es sich, wenn über einen Zulauf dem Dampf-Stripper Wasser oder Dampf zugegeben werden kann. Dadurch können die Temperatur und die Reinigungsleistung in dem Dampf-Stripper besonders genau eingestellt werden.

Die Erfindung zeichnet sich auch bevorzugt dadurch aus, dass der Pelletseingang und der Pelletsausgang des Vakuumsilos eine erste bzw. eine zweite gasdichte Fördereinrichtung aufweist. Dadurch können die Pellets dem Vakuumsilo kontinuierlich aufgegeben und entnommen werden, ohne dass der Vakuumsilo Luft saugt. Der Unterdruck in dem Vakuumsilo geht daher trotz kontinuierlicher Betriebsweise nicht verloren.

Zweckmässigerweise weist der Gasausgang des Vakuumsilos eine Vakuumpumpe auf. Dadurch lässt sich in dem Vakuumsilo ein gleichbleibender Unterdruck herstellen, welcher zu der nahezu vollständigen Entfernung der Geruchskomponenten aus den Pellets führt.

In einer weiteren Ausführungsform der Erfindung wird das Gas am Gaseingang des Vakuumsilos über ein zweites Ventil und einen in Strömungsrichtung anschliessenden Gaserhitzer geführt wird. Das zweite Ventil ermöglicht die genaue Einstellung des Unterdrucks. Der Gaserhitzer heizt das Gas auf die notwendige Temperatur auf, falls das Gas diese im ersten Wärmetauscher noch nicht erreicht hat.

In einer weiteren Ausführungsform der Erfindung weist der Vakuumsilo eine Mantelheizung auf. Die Mantelheizung verhindert die Kondensierung und die Ablagerung von Geruchskomponenten an der Innenseite des Vakuumsilos und somit eine Verschmutzung des Vakuumsilos. Die Mantelheizung kann zusätzlich oder anstatt des Gaserhitzers eingesetzt werden.

Bevorzugt ist das Gas ein Inertgas oder sauerstoffreduzierte Luft. Wesentlich ist, dass möglichst wenig Sauerstoff vorhanden ist, welcher bei den vorliegenden hohen Temperaturen auto-oxidative Abbaureaktionen des Polyolefins auslösen kann und dadurch das bereits recycelte Polyolefin weiter abgebaut wird.

In einer weiteren bevorzugten Ausführungsform der Erfindung wird der Vakuumsilo mit einem Druck zwischen 0,01 bar und 0,9 bar und bevorzugt zwischen 0,6 bar und 0,8 bar betrieben. Bei diesem Unterdruck werden die oben beschriebenen Vorteile des zweiten Prozessschrittes schlagend.

Als vorteilhaft erweist es sich, wenn der Pelletseingang in den ersten Wärmetauscher die zweite gasdichte Fördereinrichtung aufweist und der Pelletsausgang aus dem ersten Wärmetauscher eine dritte gasdichte Fördereinrichtung aufweist. Dadurch kann über den zweiten Wärmetauscher keine Luft in den Vakuumsilo gezogen werden, selbst wenn die geruchsfreien Pellets aus dem ersten Wärmetauscher ausgetragen werden. Zweckmässigerweise wird das Gas von dem Wärmetauscher in den Vakuumsilo durch eine Bypassleitung transportiert, in welcher das zweite Ventil, der Gaserhitzer und ein optionaler Filter integriert sind. Dadurch ist der Pelletsstrom von dem Gasstrom am Übergang von dem ersten Wärmetauscher zu dem Vakuumsilo getrennt und die Medien können getrennt voneinander auf ein optimales Zusammenwirken behandelt werden. In einer besonders bevorzugten Ausführungsform der Erfindung wird das Verfahren kontinuierlich betrieben. Die kontinuierliche Betriebsweise ermöglicht eine energieschonende und effiziente Herstellung von geruchsbefreiten recycelten Polyolefin-Pellets. Als besonders vorteilhaft erweist es sich, wenn die Pellets am Pelletsausgang des dritten Verfahrensschrittes des ersten Wärmetauschers eine Oberflächentemperatur von weniger als 60 °C besitzen. Dadurch ist ein Abbau des Pellets-Materials durch erhöhte Temperatur nach deren Herstellung vermieden.

Weitere Vorteile und Merkmale ergeben sich aus der nachfolgenden Beschreibung eines Ausführungsbeispiels der Erfindung unter Bezugnahme auf die schematischen Darstellungen. Es zeigt in nicht massstabsgetreuer Darstellung:

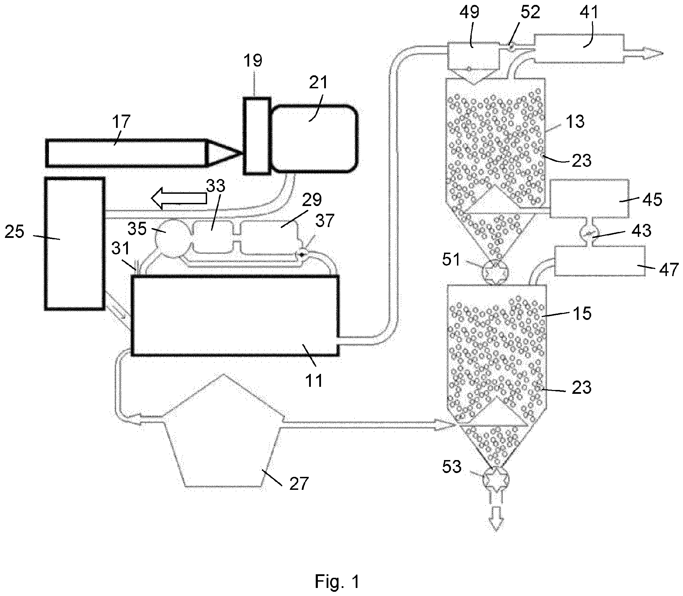

- Figur 1:: Fliessbild eines Verfahrens zur Geruchsentfernung aus recycelten Polyolefin-Pellets.

In der Figur 1 ist ein Fliessbild bzw. eine Prinzip-Skizze eines Verfahrens zur Geruchsentfernung aus recycelten Polyolefin-Pellets gezeigt.

Das Verfahren umfasst drei Schritte, wobei der erste Schritt in einem Dampf-Stripper 11 umgesetzt wird, der zweite Schritt in einem Vakuumsilo 13 umgesetzt wird und der dritte Schritt in einem ersten Wärmetauscher 15 umgesetzt wird.

In einem vorhergehenden Schritt zur Pellets- bzw. Granulatherstellung werden zuerst aus gebrauchten Polyolefinverpackungen, insbesondere Behältern sowie Verschlüsse Flakes (in Deutsch Schnipsel) hergestellt. Die Polyolefin-Flakes werden aussortiert, aufgereinigt und gewaschen, danach extrudiert und pelletisiert. Bei der Extrusion wird meist über eine Entgasungsschnecke oder Schmelzeentgasung bereits ein Teil der geruchsaktiven Kontaminationen entfernt.

Nach einer Schmelzfiltration 19 wird das Extrudat in einer Unterwasser-Granulierung 21 zu Pellets 23 ausgebildet. Das an den Pellets 23 anhaftende Wasser wird in einem Wasser-Separator 25 grösstenteils abgetrennt. Aus dem Extrusions-Schritt gelangen die Pellets 23 feucht und heiss in den Dampf-Stripper 11.

Im Dampf-Stripper 11 wird heißer Stickstoff, welcher in einem Stickstoff-Generator 27 hergestellt werden kann, bei 110° bis 160°C (Limonen Siedepunkt 175°C) zirkuliert und mit den Pellets 23 in Kontakt gebracht. Dadurch werden die Pellets 23 für den zweiten Schritt in dem Vakuumsilo 13 vorgewärmt. In einer Kondensatfalle 29 kann der Dampf, welcher mit dem zirkulierenden Stickstoff abtransportiert wird, ausgefällt werden. Bei Bedarf wird zusätzlich Wasser oder Dampf über einen Zulauf 31 dem Dampf-Stripper 11 hinzugefügt.

Um den Energieverlust so gering wie möglich zu halten, ist die Kondensatfalle 29 in einen ersten Teilstrom 30 des umlaufenden Stickstoffs integriert. Nach der Kondensatfalle 29 wird der vom Dampf befreite Stickstoff in einem Vorwärmer 33 erhitzt und mit einer Pumpe 35 wieder in den Dampf-Stripper 11 eingespeist. Der beladene Stickstoff kann über ein erstes Ventil 37 vollständig oder teilweise in einen zweiten Teilstrom 39 umgeleitet werden. Dadurch wird der zirkulierende Stickstoff nur in dem ersten Teilstrom 30 abgekühlt und eine Überladung der Kondensatfalle 29 kann durch Umleitung in den zweiten Teilstrom 39 verhindert werden.

Der mit dem Stickstoff austretende Dampf reisst Geruchskomponenten besonders effizient insbesondere von der Pellets-Oberfläche weg und kann in der Kondensationsfalle 29 abgetrennt werden. Solche an der Pelletoberfläche haftende Geruchskomponenten sind beispielsweise Terpene. Das verdampfende Wasser kühlt die Pelletoberfläche und verhindert zusätzlich ein verkleben der Pellets 23 in dem Dampf-Stripper 11.

Die Stickstoffmenge und Temperatur wird so geregelt, dass ein anhaften bzw. verkleben der Pellets 23 verhindert wird. Eine Pellets Oberflächentemperatur größer 100 °C und kleiner 120 °C wird angestrebt.

In dem Dampf-Stripper 11 werden die Pellets 23 auf 100°C bis 120°C erhitzt, um Kondensatabscheidungen im Vakuumsilo 13 zu verhindern. Der Großteil des Wassers und der Verunreinigungen wird über die Kondensatfalle 29 abgetrennt.

Bevorzugt ist der Dampf-Stripper 11 eine horizontales Drehrohr mit Zwangsförderung und einem Verweilzeitspektrum +/- 20% der durchschnittlichen Verweilzeit.

Im zweiten Schritt werden die Pellets 23 dem Vakuumsilo 13 aufgegeben, in welchem ein Unterdruck besteht, indem der Druck in dem Vakuumsilo 13 zwischen 0,01bar bis 0,9bar beträgt. Dabei wird ein vorerwärmtes Gas vom Boden des Vakuumsilos 13 ausgehend von einer Vakuumpumpe 41 durch den Vakuumsilo gesaugt. Da sich die Gasmenge am Gaseintritt durch ein zweites Ventil 43 reduzieren lässt, kann durch die Vakuumpumpe 41 ein Unterdruck in dem Vakuumsilo 13 aufgebaut werden. Bevor das Gas in den Vakuumsilo 13 eintritt, wird es durch einen Gaserhitzer 45 und einen Filter 47 geführt.

Die Beschickung und die Entnahme der Pellets 23 aus dem Vakuumsilo 13 erfolgt jeweils über eine möglichst gasdichte Fördereinrichtung, damit der Unterdruck durch die Pelletsförderung nicht zerstört wird. Solche Fördereinrichtungen können Vakuumförderer oder Zellradschleusen sein. Am Pelletseingang kann ein Vakuumförderer 49 und am Pelletsausgang eine erste Zellradschleuse 51 vorgesehen sein. Der Vakuumförderer 49 kann über ein drittes Ventil 52 mit der Vakuumpumpe 41 verbunden sein.

Das heiße zirkulierende Gas, beispielsweise Kohlendioxid, Stickstoff oder Luft mit mit reduziertem Sauerstoffgehalt wird bei einem Unterdruck durch die Pellets 23 gesaugt.

Bei einem Unterdruck verteilt sich das Gas besser als bei Luftüberschuss und das System kann auf Rührwerke verzichten. Auch ist anstatt einer diskontinuierlichen Betriebsweise eine effizientere kontinuierliche Betriebsweise möglich.

Der heiße Gasstrom (> 125°C) wird so dosiert, dass die Oberflächentemperatur der Pellets 23 123 °C nicht übersteigt. Dadurch laufen die Pellets 23 nicht Gefahr untereinander zu verkleben. Falls durch einen Anlagenstopp die Pellets lokal überhitzen würden, und dadurch verkleben würden, wird der Gasstrom in der Temperatur abgesenkt und lokale Agitatoren dazu verwendet, das Granulat rieselfähig zu halten. Als Agitatoren haben sich Luftstöße, Vibrationen und Stempel bewährt, die in das Material eindringen.

Der Schmelzpunkt der Pellets kann die Geruchsentfernung aus den Pellets 23 erheblich limitieren. Beim vorliegenden Verfahren werden zwei Vorteile eines Unterdrucks bzw. eines Vakuums genützt:
Der Wärmeübergang zwischen dem Gas und den Pellets 23 ist durch den Unterdruck stark eingeschränkt. Die Migration der Geruchskomponenten und die Verdampfung sind jedoch stark beschleunigt, da der Dampfdruck der Geruchskomponenten durch den Unterdruck steigt und die Geruchskomponenten mit fallenden Druck in dem Vakuumsilo flüchtiger werden.

Durch die erhöhte Gastemperatur können sich die Geruchskomponenten besser im Gas lösen.

Durch den Unterdruck verdampfen Geruchskomponenten bei deutlich geringeren Temperaturen verglichen mit dem Stand der Technik.

Durch die höheren Temperaturen verdampfen die Geruchskomponenten deutlich besser als im Stand der Technik.

Durch die homogene Pelletstemperaturverteilung bzw. die geringen Unterschiede der Pelletstemperaturen in dem Vakuumsilo, rekondensieren weniger geruchsaktive Substanzen auf den kälteren Pellets bzw. Granulatkörnern und diese können einfacher aus dem Prozess entfernt werden. Es können daher Geruchskomponenten ausgetrieben werden, die tief in den Pellets eingebettet sind und nur langsam an die Oberfläche migrieren. Olfaktorisch muffige Kontaminationen wie Carbonsäuren, Aldehyde, Lactone, insbesondere Nonanal, Nonenal, Buttersäure oder Valeriansäure können daher nahezu vollständig aus den Pellets 23 entfernt werden.

Da das Erhitzen und die Dekontamination durch den ersten und den zweiten Schritt des Verfahrens entkoppelt werden, können die Pellets viel länger unter einer erhöhten Temperatur verweilen, ohne untereinander zu verkleben. Diese ist bei bis jetzt bekannten Prozessen nicht möglich. Beim vorliegenden Verfahren können die Pellets 23 mehr als 10 Stunden über 100°C verweilen.

Der Wärmetauscher 15 hat vor allem die Aufgabe den Energieverlust so gering wie möglich zu halten und thermische Abbauprozesse durch ein Abkühlen der Pellets abrupt zu beenden. Das Gas strömt in dem Wärmetauscher 15 im Gegenstrom, wodurch der Wärmeübergang von den Pellets 23 auf das Gas ein Vorwärmen des Gases (Eintrittstemperatur < 50 °C) und ein Abkühlen der Pellets bewirkt. Die abgekühlten Pellets 23 bzw. das abgekühlte Granulat werden durch eine gasdichte Fördereinrichtung bevorzugt in Gestalt einer zweiten Zellradschleuse 53 aus dem Wärmetauscher 15 ausgetragen. Das Gas kann Stickstoff sein, welcher in dem Stickstoffgenerator 27 erzeugt wird.

Durch die schlechte Wärmeleitfähigkeit können heiß abgepackte Granulate nur schlecht ihre Energie an die Umgebung abgeben und können je nach Umgebungstemperatur noch tagelang heiß bleiben und entsprechend abbauen. Dies kann durch das Vorsehen des Wärmetauschers 15 verhindert werden.

Als Gas wird entweder ein Inertgas oder sauerstoffreduzierte Luft verwendet, da Luft Sauerstoff enthält und der Sauerstoff bei den sehr hohen Temperaturen auto-oxidative Abbauprozesse auslöst bzw. die primären und sekundären Antioxidantien erschöpft, und weiteren Recycling Prozessen schadet. Beispielsweise kann der Sauerstoffgehalt in der Luft auf unter 10 Vol.-% reduziert werden. Als Inertgas kann Stickstoff verwendet werden, welcher in einem Stickstoffgenerator aus Luft hergestellt wird. Denkbar ist es auch, dass als Inertgas Kohlendioxid verwendet wird, welches bei der Energieerzeugung für das vorliegende Verfahren bei der Verbrennung von Erdgas entsteht.

### Legende:

- 11: Dampf-Stripper
- 13: Vakuumsilo
- 15: Erster Wärmetauscher
- 17: Extruder
- 19: Schmelzfiltration
- 21: Unterwasser-Granulierung
- 23: Pellets
- 25: Wasser-Separator
- 27: Stickstoff-Generator
- 29: Kondensatfalle
- 30: Erster Teilstrom
- 31: Zulauf
- 33: Vorwärmer
- 35: Pumpe
- 37: Erstes Ventil
- 39: Zweiter Teilstrom
- 41: Vakuumpumpe
- 43: Zweites Ventil
- 45: Gaserhitzer
- 47: Filter
- 49: Vakuumförderer
- 51: Erste Zellradschleuse
- 52: Zweites Ventil
- 53: Zweite Zellradschleuse

## Patentansprüche

1. Verfahren zur Geruchsentfernung aus recycelten Polyolefin-Pellets (23), wobei gebrauchte wiederverwertbare Polyolefin-Flakes in einem Extruder (17) extrudiert werden und die noch geruchsbelasteten Polyolefin-Pellets (23) in einer Unterwasser-Granulierung (21) oder Wasser-Ring-Granulierung ausgebildet werden und ein Geruchsentfernungs-Prozess vorgesehen ist, bei welchem in einem ersten Schritt die feuchten Pellets (23) in einem Dampf-Stripper (11) mit einem zirkulierenden Inertgas mit einer Temperatur zwischen 110 °C und 160 °C in Kontakt gebracht werden und der Dampf in einer Kondensatfalle (29) ausgefällt wird, wodurch in dem ersten Schritt an der Oberfläche der Pellets (23) anhaftende Geruchskomponenten entfernt werden und die Pellets (23) vorgewärmt werden,
**dadurch gekennzeichnet**
**dass** in einem zweiten Schritt die Pellets (23) einem unter Unterdruck stehenden Vakuumsilo (13) aufgegeben werden und mit einem im Gegenstrom strömenden Gas kontaktiert werden, wobei durch den Unterdruck in die Pellets (23) eingedrungene Geruchskomponenten entfernt werden und die Temperatur der Pelletsoberfläche über mehr als 10 Stunden unterhalb von 123 °C bleibt und
**dass** in einem dritten Schritt die Pellets (23) nach dem Vakuumsilo (13) einem ersten Wärmetauscher (15) aufgegeben werden und mit dem im Gegenstrom strömenden Gas aus dem zweiten Schritt in Kontakt gebracht werden, wodurch die Pellets (23) gekühlt werden und das Gas für den zweiten Schritt vorgewärmt wird.

2. Verfahren nach Anspruch 1, **dadurch gekennzeichnet, dass** die Kondensatfalle (29) als Teilstrom des Inertgas-Kreislaufes betrieben wird.

3. Verfahren nach Anspruch 1 oder 2, **dadurch gekennzeichnet, dass** die Kondensatfalle (29) als ein zweiter Wärmetauscher betrieben wird.

4. Verfahren nach einem der vorangehenden Ansprüche, **dadurch gekennzeichnet, dass** die Oberflächentemperatur der Pellets (23) in dem Dampf-Stripper (11) zwischen 100 °C und 120 °C beträgt.

5. Verfahren nach einem der vorangehenden Ansprüche, **dadurch gekennzeichnet, dass** der Dampf-Stripper ein horizontal orientiertes Drehrohr (11) mit einer Zwangsförderung der Pellets (23) durch die Rotation des Drehrohres ist.

6. Verfahren nach einem der vorangehenden Ansprüche, **dadurch gekennzeichnet, dass** die Verweilzeit der Pellets (23) in dem Dampf-Stripper (11) zwischen 30 min und 180 min beträgt und bevorzugt zwischen 50 min und 120 min beträgt.

7. Verfahren nach einem der vorangehenden Ansprüche, **dadurch gekennzeichnet, dass** über einen Zulauf (31) dem Dampf-Stripper (11) Wasser oder Dampf zugegeben werden kann.

8. Verfahren nach einem der vorangehenden Ansprüche, **dadurch gekennzeichnet, dass** der Pelletseingang und der Pelletsausgang des Vakuumsilos (13) eine erste bzw. eine zweite gasdichte Fördereinrichtung (49,51) aufweist.

9. Verfahren nach einem der vorangehenden Ansprüche, **dadurch gekennzeichnet, dass** der Gasausgang des Vakuumsilos eine Vakuumpumpe (41) aufweist.

10. Verfahren nach einem der vorangehenden Ansprüche, **dadurch gekennzeichnet, dass** das Gas am Gaseingang des Vakuumsilos (13) über ein zweites Ventil (43) und einen in Strömungsrichtung anschliessenden Gaserhitzer (45) geführt wird.

11. Verfahren nach einem der vorangehenden Ansprüche, **dadurch gekennzeichnet, dass** der Vakuumsilo (13) eine Mantelheizung aufweist.

12. Verfahren nach einem der vorangehenden Ansprüche, **dadurch gekennzeichnet, dass** das Gas ein Inertgas oder sauerstoffreduzierte Luft ist.

13. Verfahren nach einem der vorangehenden Ansprüche, **dadurch gekennzeichnet, dass** der Vakuumsilo (13) mit einem Druck zwischen 0,01 bar und 0,9 bar und bevorzugt zwischen 0,6 bar und 0,8 bar betrieben wird.

14. Verfahren nach einem der vorangehenden Ansprüche, **dadurch gekennzeichnet, dass** der Pelletseingang in den ersten Wärmetauscher (15) die zweite gasdichte Fördereinrichtung (51) aufweist und der Pelletsausgang aus dem ersten Wärmetauscher (15) eine dritte gasdichte Fördereinrichtung (53) aufweist.

15. Verfahren nach einem der Ansprüche 10 bis 14, **dadurch gekennzeichnet, dass** das Gas von dem ersten Wärmetauscher (15) in den Vakuumsilo durch eine Bypassleitung transportiert wird, in welcher das zweite Ventil (43), der Gaserhitzer (45) und ein optionaler Filter (47) integriert sind.

16. Verfahren nach einem der vorangehenden Ansprüche, **dadurch gekennzeichnet, dass** das Verfahren kontinuierlich betrieben wird.

17. Verfahren nach einem der vorangehenden Ansprüche, **dadurch gekennzeichnet, dass** die Pellets (23) am Pelletsausgang des ersten Wärmetauschers (15) eine Oberflächentemperatur von weniger als 60 °C besitzen.

## Claims

1. A process for deodorization of recycled polyolefin pellets (23), in which are extruded from used recyclable polyolefin flakes in an extruder (17), and the polyolefin pellets (23) that are still odorous are formed in an underwater pelletizer (21) or water ring pelletizer and a deodorization process is provided for which in a first step, the moist pellets (23) are contacted with a circulating inert gas (at a temperature between 110°C and 160°C) in a steam stripper (11) and the steam is precipitated in a condensate trap (29), by which, in the first step, odor components adhering to the surface of the pellets (23) are removed, and the pellets (23) are preheated;
**characterized in**
**that** in a second step, the pellets (23) are sent to a vacuum silo (13) under negative pressure and contacted with a gas flowing in countercurrent, wherein odor components that have penetrated into the pellets (23) are removed by the negative pressure and the temperature of the pellet surface remains below 123°C for more than 10 hours, and that in a third step, after the vacuum silo (13) the pellets (23) are sent to a first heat exchanger (15) and contacted with the gas flowing in countercurrent from the second step, by which the pellets (23) are cooled and the gas is preheated for the second step.

2. The process according to claim 1, **characterized in that** the condensate trap (29) is operated as a partial flow of the inert gas circuit.

3. The process according to claim 1 or 2, **characterized in that** the condensate trap (29) is operated as a second heat exchanger.

4. The process according to one of the preceding claims, **characterized in that** the surface temperature of the pellets (23) in the steam stripper (11) is between 100°C and 120°C.

5. The process according to one of the preceding claims, **characterized in that** the steam stripper is a horizontally oriented rotary tube (11) with forced conveying of the pellets (23) by means of the rotation of the rotary tube.

6. The process according to one of the preceding claims, **characterized in that** the dwelling time of the pellets (23) in the steam stripper (11) is between 30 min and 180 min and is preferably between 50 min and 120 min.

7. The process according to one of the preceding claims, **characterized in that** water or steam can be added to the steam stripper (11) via an inlet (31).

8. The process according to one of the preceding claims, **characterized in that** the pellet inlet and the pellet outlet of the vacuum silo (13) have a first and a second gas-tight conveying device (49, 51), respectively.

9. The process according to one of the preceding claims, **characterized in that** the gas outlet of the vacuum silo has a vacuum pump (41).

10. The process according to one of the preceding claims, **characterized in that** the gas at the gas inlet of the vacuum silo (13) is guided via a second valve (43) and a gas heater (45) that is connected in the direction of flow.

11. The process according to one of the preceding claims, **characterized in that** the vacuum silo (13) has a jacket heating unit.

12. The process according to one of the preceding claims, **characterized in that** the gas is an inert gas or oxygen-reduced air.

13. The process according to one of the preceding claims, **characterized in that** the vacuum silo (13) is operated at a pressure between 0.01 bar and 0.9 bar and preferably between 0.6 bar and 0.8 bar.

14. The process according to one of the preceding claims, **characterized in that** the pellet inlet to the first heat exchanger (15) has the second gas-tight conveying device (51), and the pellet outlet from the first heat exchanger (15) has a third gas-tight conveying device (53).

15. The process according to one of claims 10 to 14, **characterized in that** the gas is transported from the first heat exchanger (15) into the vacuum silo through a bypass line, in which the second valve (43), the gas heater (45) and an optional filter (47) are integrated.

16. The process according to one of the preceding claims, **characterized in that** the process is operated continuously.

17. The process according to one of the preceding claims, **characterized in that** the pellets (23) at the pellet outlet of the first heat exchanger (15) have a surface temperature of less than 60°C.

## Revendications

1. Procédé pour l'élimination des odeurs de pellets de polyoléfine recyclés (23), cependant que des flocons de polyoléfine utilisés recyclables sont extrudés dans une extrudeuse (17) et les pellets de polyoléfine encore malodorants (23) sont formés dans une granulation sous eau (21) ou une granulation à anneau d'eau et un processus d'élimination des odeurs est prévu pour lequel, dans une première étape, les pellets humides (23) sont mis en contact avec un gaz inerte circulant dans un strippeur à vapeur (11) avec un gaz inerte circulant avec une température entre 110°C et 160°C et la vapeur est précipitée dans un purgeur de condensat (29) si bien que dans la première étape des composants odorants qui adhèrent à la surface des pellets (23) sont éliminés et les pellets (23) sont préchauffés,
**caractérisé en ce**
**que**, dans une seconde étape, les pellets (23) sont déversés dans un silo sous vide en dépression et sont mis en contact avec un gaz qui s'écoule à contre-courant, cependant que des composants odorants qui ont pénétré dans les pellets (23) à cause de la dépression sont éliminés et la température de la surface des pellets reste en dessous de 123°C pendant plus de 10 heures et que, dans une troisième étape, les pellets (23) sont amenés, après le silo sous vide (13), à un premier échangeur thermique et sont mis en contact avec le gaz qui s'écoule à contre-courant de la seconde étape si bien que les pellets (23) sont refroidis et le gaz pour la seconde étape est préchauffé.

2. Procédé selon la revendication 1, **caractérisé en ce que** le purgeur de condensat (29) fonctionne comme courant partiel du circuit de gaz inerte.

3. Procédé selon la revendication 1 ou 2, **caractérisé en ce que** le purgeur de condensat (29) fonctionne comme un second échangeur thermique.

4. Procédé selon l'une des revendications précédentes, **caractérisé en ce que** la température de surface des pellets (23) dans le strippeur à vapeur (11) se situe entre 100 °C et 120 °C.

5. Procédé selon l'une des revendications précédentes, **caractérisé en ce que** le strippeur à vapeur est un tube rotatif (11) orienté horizontalement avec une alimentation forcée des pellets (23) par la rotation du tube rotatif.

6. Procédé selon l'une des revendications précédentes, **caractérisé en ce que** le temps de séjour des pellets (23) dans le strippeur à vapeur (11) se situe entre 30 minutes et 180 minutes et de préférence entre 50 minutes et 120 minutes.

7. Procédé selon l'une des revendications précédentes, **caractérisé en ce que** de l'eau ou de la vapeur peut être ajoutée au strippeur à vapeur (11) par une conduite d'alimentation (31).

8. Procédé selon l'une des revendications précédentes, **caractérisé en ce que** l'entrée des pellets et la sortie des pellets du silo sous vide (13) présente un premier et/ou un second dispositif d'acheminement étanche au gaz (49, 51).

9. Procédé selon l'une des revendications précédentes, **caractérisé en ce que** la sortie de gaz du silo sous vide présente une pompe à vide (41).

10. Procédé selon l'une des revendications précédentes, **caractérisé en ce que** le gaz est guidé à l'entrée de gaz du silo sous vide (13) par une seconde soupape (43) et un réchauffeur de gaz (45) qui suit dans le sens de l'écoulement.

11. Procédé selon l'une des revendications précédentes, **caractérisé en ce que** le silo sous vide (13) présente un chauffe-gaine.

12. Procédé selon l'une des revendications précédentes, **caractérisé en ce que** le gaz est un gaz inerte ou de l'air à teneur en oxygène réduite.

13. Procédé selon l'une des revendications précédentes, **caractérisé en ce que** le silo sous vide (13) fonctionne avec une pression entre 0,01 bar et 0,9 bar et de préférence entre 0,6 bar et 0,8 bar.

14. Procédé selon l'une des revendications précédentes, **caractérisé en ce que** l'entrée des pellets dans le premier échangeur thermique (15) présente le second dispositif d'acheminement étanche au gaz (51) et la sortie des pellets du premier échangeur thermique (15) présente un troisième dispositif d'acheminement étanche au gaz (53).

15. Procédé selon l'une des revendications 10 à 14, **caractérisé en ce que** le gaz du premier échangeur thermique (15) est transporté dans le silo sous vide par une conduite bypass dans laquelle la seconde soupape (43), le réchauffeur de gaz (45) et un filtre optionnel (47) sont intégrés.

16. Procédé selon l'une des revendications précédentes, **caractérisé en ce que** le procédé est effectué en continu.

17. Procédé selon l'une des revendications précédentes, **caractérisé en ce que** les pellets (23) à la sortie des pellets du premier échangeur thermique (15) possèdent une température de surface inférieure à 60 °C.
